(19) **Europäisches Patentamt / European Patent Office / Office européen des brevets**

(11) **EP 2 877 893 B1**

(12) **FASCICULE DE BREVET EUROPEEN**

(45) Date de publication et mention
de la délivrance du brevet:
**28.09.2016 Bulletin 2016/39**

(21) Numéro de dépôt: **13756577.6**

(22) Date de dépôt: **18.07.2013**

(51) Int Cl.:
***G02C 13/00*** *(2006.01)*

(86) Numéro de dépôt international:
**PCT/FR2013/051746**

(87) Numéro de publication internationale:
**WO 2014/016502 (30.01.2014 Gazette 2014/05)**

(54) **PROCÉDÉ DE MESURE DE PARAMÈTRES MORPHO-GÉOMÉTRIQUES D'UN INDIVIDU PORTEUR DE LUNETTES**

VERFAHREN ZUR MESSUNG DER GEOMETRISCHEN UND MORPHOMETRISCHEN PARAMETER EINER BRILLENTRAGENDEN PERSON

METHOD FOR MEASURING THE GEOMETRIC MORPHOMETRIC PARAMETERS OF A PERSON WEARING GLASSES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.07.2012 FR 1257167**

(43) Date de publication de la demande:
**03.06.2015 Bulletin 2015/23**

(73) Titulaire: **Essilor International
(Compagnie Générale d'Optique)
94220 Charenton-le-Pont (FR)**

(72) Inventeurs:
• **DIVO, Fabien
F-94220 Charenton Le Pont (FR)**

• **PINAULT, Philippe
F-94220 Charenton Le Pont (FR)**
• **CONDAT, Christophe
F-94220 Charenton Le Pont (FR)**
• **HADDADI, Ahmed
F-94220 Charenton Le Pont (FR)**

(74) Mandataire: **Allain, Laurent et al
Ipsilon
Le Centralis
63, avenue du Général Leclerc
92340 Bourg-la-Reine (FR)**

(56) Documents cités:
**WO-A1-2008/129168     DE-A1-102004 063 160
FR-A1- 2 860 887     FR-A1- 2 980 592**

**Description**

Le domaine technique de l'invention concerne les procédés de mesure de paramètres morpho-géométriques d'un individu porteur de lunettes. Ces paramètres peuvent, par exemple, inclure la distance pupillaire PD, la hauteur H séparant la pupille du bord inférieur d'un verre, l'angle pantoscopique ΘP qui est l'angle d'inclinaison des verres par rapport au plan facial de l'individu, la distance DVO entre l'oeil et le verre V ainsi que le centre de rotation CRO de l'oeil. La connaissance de ces paramètres est indispensable pour bien personnaliser une paire de lunettes, et en particulier des verres progressifs.

Il existe déjà des procédés permettant d'effectuer des mesures d'un certain nombre de ces paramètres morpho-géométriques. Une première catégorie de ces procédés met en oeuvre une colonne de mesures verticale et de grande taille, avec le réglage d'une caméra à hauteur des yeux, l'individu porteur de lunettes se regardant dans un miroir. Ce type d'appareillage est très encombrant et nécessite donc un local de grande dimension pour réaliser les mesures, et il est peu souple d'utilisation dans la mesure où il ne peut pas être déplacé facilement pour affiner les mesures, ni être dissocié en plusieurs éléments pour s'adapter à une situation donnée.

Une deuxième catégorie de procédés implique un appareillage de plus petite taille, pouvant notamment être installé sur une table, mais nécessitant un protocole de mesure et de mise en position de l'individu porteur de lunettes, très contraignant. En effet, ce type de procédé oblige l'individu à adopter un port de tête particulier, et à installer un clip doté d'un balancier sur la monture de lunettes. Une première étape consiste alors à faire adopter une posture naturelle à l'individu, le balancier étant alors bloqué pour figer l'angle entre le clip et le balancier, cet angle correspondant à l'angle pantoscopique. Lors d'une deuxième étape, l'individu équipé de sa monture de lunettes et de son clip, regarde une caméra fixée au dessus d'un écran. Il doit incliner sa tête de manière à ce que le balancier bloqué soit perpendiculaire à l'axe passant par les yeux et la caméra. Un tel procédé exige des réglages complexes et précis, et réclame une certaine dextérité de la part de l'individu porteur de lunettes, pour pouvoir se positionner précisément par rapport à l'axe de la caméra et pour figer la position du balancier en conséquence.

Les documents WO 2008/129168 A1 et FR 2 860 887 A1 décrivent des procédés connus de mesure de paramètres morpho-géométriques.

Les procédés de mesures de paramètres morpho-géométriques selon l'invention mettent en oeuvre un appareillage souple d'utilisation, pouvant facilement et rapidement effectuer des mesures précises et fiables desdits paramètres, tout en évitant à l'individu porteur de lunettes d'adopter des postures contraignantes. De tels procédés sont conçus pour éliminer un certain nombre de sources d'erreur potentielles au niveau de la détermination des paramètres morpho-géométriques, et de manière à se rapprocher d'une posture naturelle.

L'invention a pour objet un procédé de mesure de paramètres morpho-géométriques d'un individu portant des lunettes, ledit procédé mettant en oeuvre un dispositif informatique autonome comprenant un écran, une cible, un système d'acquisition d'images compact et doté d'un moyen de détermination de son inclinaison, ledit système étant relié audit écran, et un calculateur permettant de piloter le système d'acquisition d'images et de traiter les images obtenues, caractérisé en ce qu'il comprend les étapes suivantes,

- Acquisition d'une information concernant une première position de la monture portée par un individu, lorsqu'il regarde un point situé devant lui à l'infini, avec un port de tête naturel selon une direction sensiblement horizontale, la paire de lunettes occupant une position naturelle sur le visage de l'individu,

- Observation par l'individu de la cible placée dans une position connue par rapport au système d'acquisition d'images, en effectuant au moins un mouvement de tangage de la tête de bas en haut sans quitter la cible des yeux, la paire de lunettes conservant une position inchangée sur le visage de l'individu par rapport à la première étape,

- Acquisition au moyen du même système d'acquisition d'images que celui utilisé pour la première posture, de plusieurs images du visage de l'individu lors de ce mouvement de rotation, chaque image correspondant à un degré d'inclinaison particulier de la tête,

- Sélection de l'image la plus proche de l'image idéale pour laquelle l'inclinaison du visage par rapport à un axe reliant les yeux à la cible observée, est identique à l'inclinaison du visage par rapport à une direction horizontale adoptée par l'individu lorsqu'il regarde un point à l'infini,

- Traitement par le calculateur de l'image sélectionnée pour déterminer les paramètres morpho-géométriques de l'individu, à partir de la position des yeux, de la position de la monture dans la première posture, de la position de la monture sur l'image sélectionnée, et du degré d'inclinaison du système d'acquisition d'images,

- Restitution du résultat des mesures.

**EP 2 877 893 B1**

Un problème rencontré avec un procédé pour lequel un individu n'adopterait que deux postures distinctes et fixes, l'une pour regarder un point situé à l'infini devant lui, et l'autre pour regarder une cible qui n'est pas forcément alignée selon une direction horizontale, est qu'il introduit, de façon quasi-systématique, une erreur sous la forme d'un écart angulaire. En effet, l'angle d'inclinaison du visage de l'individu par rapport à un axe reliant ses yeux à la cible, est légèrement différent de l'angle d'inclinaison que fait son visage avec un axe horizontal reliant ses yeux au point fictif situé à l'infini. Même si cette différence demeure réduite, elle peut toutefois induire des écarts non négligeables sur les valeurs déterminées des paramètres morpho-géométriques de l'individu. La phase de traitement des deux images ainsi acquises, nécessite alors l'utilisation d'un algorithme spécifique, destiné à corriger cette erreur. Le principe d'un procédé de mesure selon l'invention est de s'affranchir de cette étape supplémentaire de correction de cet écart angulaire, en sélectionnant une image, qui va tendre vers l'image idéale, pour laquelle l'erreur angulaire précédemment évoquée est nulle. Pour mener à bien cette opération, il est d'abord demandé à l'individu, de regarder la cible en hochant la tête de haut en bas, ou de bas en haut, puis d'acquérir une succession d'images du visage de l'individu correspondant à différentes inclinaisons de la tête de l'individu, et enfin de sélectionner l'image pour laquelle l'erreur tend vers zéro. De cette manière, l'étape de traitement d'images va s'effectuer directement, sans introduire de phase supplémentaire de correction. Dans un procédé selon l'invention, la position de la monture de lunettes sur le visage de l'individu demeure constante durant les étapes de visualisation d'un point à l'infini et de visualisation de la cible. Le système d'acquisition d'images peut comprendre au moins un appareil photo à haute définition ou au moins une caméra à haute définition. L'inclinaison de l'axe du système d'acquisition d'image doit être connue avec précision, pour notamment corriger les erreurs de parallaxe due à cette inclinaison. Le système d'acquisition d'images peut être utilisé, soit de façon fixe, avec un angle d'inclinaison donné, soit de façon mobile sur une plage d'inclinaison angulaire. Pour la première configuration, c'est le porteur qui adaptera sa position de façon à faire apparaitre son visage au centre du champ de la caméra. Pour la deuxième configuration, l'inclinaison du système d'acquisition sera adaptée à la position de l'individu pour bien cadrer son visage. Le terme « compact » attribué au système d'acquisition d'image signifie que ledit système est de petite dimension, et qu'il peut être manipulé facilement pour être posé sur un meuble usuel de type table ou bureau, et pour être incliné. Avantageusement, la cible est portée par le système d'acquisition d'images. De cette manière, l'équipement nécessaire à la mise en oeuvre d'un procédé selon l'invention, est moins dispersé. Selon un autre mode de réalisation préféré d'un procédé de mesure selon l'invention, la cible est constituée par le système d'acquisition d'images lui-même. Les images prises par le système d'acquisition notamment lorsque l'individu regarde la cible, représentent principalement la monture des lunettes positionnée par rapport aux yeux de l'individu. En effet, toutes les informations nécessaires au traitement informatique des images pour obtenir les paramètres recherchés, doivent clairement apparaitre sur lesdites images, à travers la position dans l'espace de ladite monture par rapport aux yeux de l'individu. Il est donc fondamental que sur les images apparaissent clairement et précisément, à la fois la monture et les yeux de l'individu. Les paramètres morpho-géométriques se déduisent alors aisément desdits clichés à partir de relations trigonométriques usuelles. L'écran a pour fonction principale de permettre de visualiser les images acquises lorsque l'individu adopte les différentes postures. Il peut également servir à restituer le résultat des mesures des paramètres morpho-géométriques recherchés. Le procédé peut être piloté, soit par l'individu porteur de lunettes lui-même, soit par un opérateur pouvant être un opticien. L'étape d'acquisition de l'information concernant l'inclinaison de la monture lorsque l'individu regarde horizontalement vers l'infini, peut s'effectuer de différentes façons, au moyen par exemple, du système d'acquisition d'images qui va prendre un cliché du visage de l'individu, ou au moyen d'un dispositif de repérage électronique de type inclinomètre et/ou accéléromètre, ledit dispositif étant solidarisé à la monture ou sur un clip qui est fixé à ladite monture. Le terme « solidarisé » signifie que le dispositif électronique amovible et positionnable se retrouve, soit sur le clip soit sur la monture, ou que ledit dispositif électronique est fixé de manière solidaire dans un logement prévu à cet effet soit sur le clip soit sur la monture, ou que ledit dispositif électronique est intégré à l'intérieur de la monture ou à l'intérieur du clip. Il est rappelé qu'un mouvement de tangage est un mouvement de pivotement de la tête autour d'un axe horizontal, d'avant en arrière. Un procédé selon l'invention va plutôt favoriser des étapes de mesures, dans l'optique de proposer une situation de posture naturelle et aisée, par le mouvement de tangage de la part d'un individu. Les paramètres déterminés par un tel procédé, seront ainsi plus précis et plus reproductibles que ceux nécessitant une posture contrainte.

Avantageusement, le système d'acquisition d'images est une caméra haute résolution. Typiquement une caméra haute résolution est une caméra de résolution supérieure à 1 Méga Pixels. En effet, plus la caméra a une définition élevée, plus la précision sur les mesures est satisfaisante.

Selon un premier mode de réalisation préféré d'un procédé selon l'invention, l'étape d'acquisition de l'information concernant la première position de la monture, est réalisée à partir d'une image du visage de l'individu, obtenue avec le système d'acquisition d'images. Une simple photo suffisamment bien définie, et sur laquelle le visage de l'individu apparait de façon centrée, peut convenir.

De façon préférentielle, la monture est équipée d'un élément de repérage sous la forme d'un clip doté de marqueurs et fixé sur ladite monture, lesdits marqueurs étant représentatifs de l'orientation spatiale de la monture. Un tel clip est représentatif du plan d'inclinaison de la monture sur le visage d'un individu, et permet une meilleure visualisation sur une image, de cette inclinaison. Dans ce cas, une seule caméra est nécessaire pour déterminer cette inclinaison à

3

partir des caractéristiques dimensionnelles dudit clip sur l'image capturée par la caméra. Un tel clip est déjà connu. Chaque marqueur peut, par exemple, apparaitre sous la forme d'un carré divisé en quatre petits carrés, dont les deux petits carrés d'une diagonale sont colorés différemment des deux autres petits carrés situés sur l'autre diagonale.

Selon un deuxième mode de réalisation préféré d'un procédé de mesure selon l'invention, l'étape d'acquisition de l'information concernant la première position de la monture, est réalisée au moyen d'un dispositif de repérage électronique solidarisé à la monture ou sur un clip fixé à ladite monture. Ce mode de réalisation ne nécessite pas l'acquisition d'une image. Le dispositif de repérage électronique, qui peut par exemple être constitué par un inclinomètre et/ou un accéléromètre, est relié, avec ou sans fil, à un appareillage à distance, qui va directement traiter les signaux reçus, pour fournir une information sur l'inclinaison de la monture. Ce dispositif étant alimenté par un système autonome classique, par exemple de type batterie/piles rechargeable ou non, ou de manière filaire impliquant un câble USB, il octroie un peu plus de liberté de déplacement à l'individu porteur de lunettes, car il n'est plus obligé de rester figer dans une position, afin d'être pris en photo ou d'être filmé. Préférentiellement, le clip auquel est lié le dispositif électronique de repérage peut être constitué par le clip équipé de marqueurs, et sur lequel a été ajouté ledit dispositif électronique de repérage.

De façon avantageuse, le clip est muni d'un module de communication sans fil permettant de remonter les mesures effectuées vers un appareil situé à distance. Ce mode de réalisation est encore plus souple et plus convivial, car l'individu peut circuler librement, sans être contraint par un fil de liaison entre le clip et un appareillage de traitement situé à distance.

Préférentiellement, le moyen de détermination de l'inclinaison du système d'acquisition d'images est un inclinomètre. A priori, le système d'acquisition d'images est figé dans une position donnée. Mais il peut arriver que pour des individus de très grande taille, il faille incliner le système d'acquisition d'image pour obtenir une image de ses yeux et de sa monture satisfaisante, c'est-à-dire une image sur laquelle lesdits yeux et ladite monture sont centrés sur l'écran. Or, cette inclinaison va prendre une place importante dans la détermination des paramètres morpho-géométriques de l'individu, et doit donc être connue avec précision pour être ensuite intégrée dans le calcul desdits paramètres.

Préférentiellement, les paramètres morpho-géométriques mesurés par ledit procédé sont la hauteur H entre la pupille et le rebord inférieur du verre V, et l'angle pantoscopique ΘP. Il est rappelé que l'angle pantoscopique correspond à l'angle d'inclinaison des verres V par rapport à un plan vertical, lorsque la monture est placée sur le nez de l'individu et que celui-ci regarde au loin.

Préférentiellement, un opérateur est placé devant l'individu porteur de lunettes, ledit opérateur réalisant le réglage du système d'acquisition d'images et pilotant les différentes étapes du procédé de mesures selon l'invention. Le procédé peut en effet être mis en oeuvre par un opticien pour obtenir la mesure des paramètres morpho-géométriques d'un individu porteur de lunettes. Il manipule ainsi le système d'acquisition d'images à sa convenance, et équipe ou non, l'individu porteur de lunettes avec un clip classique et/ou équipé d'un dispositif de repérage électronique sous la forme de capteurs 3D, pouvant par exemple, être un inclinomètre et/ou un accéléromètre. De même, il guide l'individu dans la pièce pour obtenir des images optimisées des yeux et de la monture de l'individu sur l'écran de visualisation. Pour ce faire, il visualise, en temps réel, lesdites images sur l'écran tourné vers lui. C'est également l'opticien qui déclenche les prises de vue et qui lance le traitement d'images via le calculateur. Un procédé de mesures selon l'invention a été principalement mis au point pour être réalisé chez un opticien.

Selon un autre mode de réalisation préféré d'un procédé de mesure selon l'invention, l'inclinaison du système d'acquisition est fixe, l'individu positionnant son visage à la hauteur adaptée, pour le faire apparaitre au centre de l'image. En effet, il peut arriver que le système d'acquisition d'images ne soit pas réglable en inclinaison. Dans ce cas, le système d'acquisition est figé dans une position donnée, et c'est l'individu qui déplace son visage pour l'amener au centre du champ dudit système d'acquisition. Pour cette configuration, l'individu subit une légère contrainte de positionnement préalable, pour réunir les bonnes conditions nécessaires à des mesures précises et fiable.

L'invention se rapporte également à un dispositif de mesure pour la mise en oeuvre d'un procédé de mesure selon l'invention. La principale caractéristique d'un dispositif selon l'invention est qu'il comprend un calculateur, au moins une caméra équipée d'un inclinomètre, un écran d'affichage permettant de visualiser les prises de vue assurées par ladite caméra ainsi que le résultat des mesures, la position de la caméra et la position de l'écran pouvant être ajustées indépendamment l'une de l'autre. Ce dispositif de mesure s'apparente à un kit de mesure, dans lequel les différentes pièces viennent se connecter les unes aux autres pour interagir et fournir les mesures souhaitées, sans forcément obéir à un agencement particulier et contraignant. En effet, ce type de dispositif présente une certaine souplesse au niveau de son montage, et peut donc facilement être installé dans tout type d'environnement, que ce soit sur une table ou un bureau, ou tout simplement parterre. Une position ajustable de l'écran indépendamment de celle de la caméra, permet de multiplier les configurations d'utilisation d'un dispositif de mesure selon l'invention, et d'accroître les performances d'un procédé de détermination selon l'invention, en positionnant de façon aussi précise que possible, les différents équipements requis pour mettre en oeuvre lesdits procédés.

Avantageusement, le dispositif de mesure est constitué par une tablette regroupant l'écran, une caméra secondaire, l'inclinomètre et le calculateur, ainsi que ladite au moins une caméra. Il faut bien souligner que la caméra et la tablette sont dissociées. Cette version du dispositif est l'une des plus compactes, et peut donc être installée dans un espace de faible encombrement. Le fait de regrouper plusieurs pièces constitutives du dispositif dans une tablette de faible dimension, ajoute encore à la souplesse d'utilisation du dispositif de mesure, car un individu ou un opérateur peut piloter l'ensemble du procédé à partir d'un seul et même objet, et opérer les réglages adéquats sans avoir à se déplacer ni à bouger les éléments les uns par rapport aux autres. Il est supposé qu'une tablette est un objet dont les faibles dimensions sont compatibles avec une manipulation manuelle aisée de la part d'un individu ou d'un opérateur. Ce type d'objet peut, en particulier, être facilement déplacé manuellement dans une pièce, afin d'être installé dans un endroit précis et être orienté dans la direction souhaitée. Cette tablette peut posséder un écran tactile, ou être utilisé plus classiquement au moyen d'une souris. La caméra peut être fixée directement à cette tablette, soit à un support permettant de soutenir ladite tablette.

De façon préférentielle, le dispositif de mesure comprend un élément de repérage de la monture sous la forme d'un clip possédant des marqueurs.

Selon un autre mode de réalisation préféré d'un dispositif de mesure selon l'invention, ledit dispositif comprend un dispositif de repérage électronique de la monture. Préférentiellement, le dispositif de repérage électronique est constitué par un inclinomètre et/ou un accéléromètre.

Préférentiellement, le dispositif de mesure comprend un support sur lequel viennent se fixer la tablette et la caméra. Le support permet de compacter le dispositif en permettant à la caméra d'être placée à proximité de la tablette, la distance entre ces deux éléments étant inférieure à quelques centimètres, et préférentiellement inférieure à 5cm.

De façon avantageuse, la caméra et la tablette sont situées de par et d'autre d'un plan vertical et font entre eux un angle compris entre 15° et 45°. Avantageusement, cet angle vaut 30°. De cette manière, l'écran est orienté dans une certaine direction et la caméra est orientée dans une direction opposée. Cette disposition permet à un opticien d'observer directement sur l'écran de la tablette, le visage de l'individu porteur de lunettes, qui est enregistré par la caméra placée au dos de ladite tablette. Pour cette configuration, l'opticien n'est pas obligé de placer la caméra à la hauteur du visage de l'individu pour acquérir une image. Il peut se contenter de placer le dispositif de mesure sur une table ou un bureau et de régler au plus juste l'inclinaison de la tablette et de la caméra.

Avantageusement, le dispositif de mesure comprend un flash et une capacité montée sur une carte électronique alimentée par un câble de type USB, ladite capacité étant apte à apporter la puissance nécessaire au fonctionnement dudit flash. Une telle capacité présente l'avantage de pouvoir charger le flash de façon très rapide et donc de déclencher plusieurs fois le flash sur une période courte.

Les procédés de mesure de paramètres morpho-géométriques d'un individu selon l'invention, présentent l'avantage d'être particulièrement ergonomique et conviviaux, dans la mesure où l'individu porteur de lunettes n'a pas à supporter un équipement particulier et n'a pas à se livrer à une série de postures contraignantes et répétitives. Ils ont de plus l'avantage de restituer instantanément à l'individu ou à l'opticien, le résultat des mesures, soit par l'intermédiaire d'un écran, soit au moyen d'un document imprimé. Enfin, le dispositif de mesure mis en oeuvre dans un procédé selon l'invention, est de taille réduite et peut donc être installé dans une pièce de faible volume, sur une table ou sur un bureau.

On donne ci-après, une description détaillée d'un mode de réalisation préféré d'un procédé de mesures selon l'invention en se référant aux figures 1 à 6.

- La figure 1 est une vue schématique de profil de la tête d'un individu et d'une caméra, l'individu regardant devant lui un point à l'infini selon une direction horizontale,

- La figure 2 est une vue schématique de profil de la tête d'un individu et d'une caméra, l'individu regardant une cible sur ladite caméra,

- La figure 3 est une vue schématique de profil de la tête d'un individu regardant devant lui un point à l'infini,

- La figure 4 est une vue schématique de profil de la tête d'un individu regardant une cible sur ladite caméra,

- La figure 5 est une vue en perspective d'un premier mode de réalisation préféré d'un dispositif permettant de mettre en oeuvre un procédé selon l'invention,

- La figure 6 est une vue en perspective d'un deuxième mode de réalisation préféré d'un dispositif permettant de mettre en oeuvre un procédé selon l'invention.

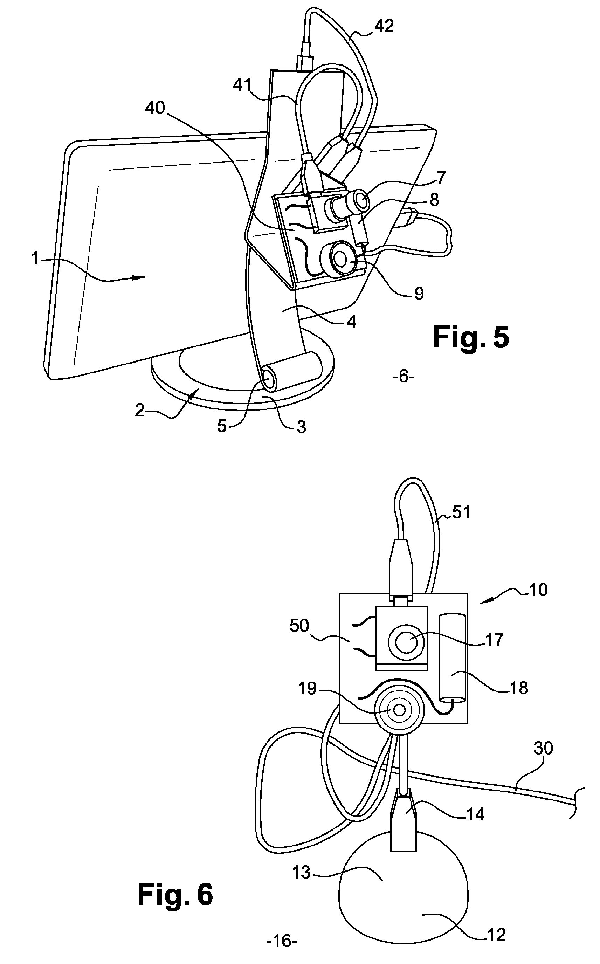

En se référant à la figure 5, un premier mode de réalisation préféré d'un dispositif de mesure permettant de mettre en oeuvre un procédé de mesure de paramètres morpho-géométriques d'un individu porteur de lunettes, est constituée par une tablette 1 comportant un écran et un calculateur, et dotée d'un support 2 lui permettant de reposer sur une surface plane et horizontale. Ce support 2 comprend une embase 3 circulaire élargie prolongée par une tige 4 de soutien montée articulée sur ladite embase 3 au moyen d'un axe de rotation 5. Autrement dit, lorsque l'embase 3 repose sur une surface horizontale 6, la tige 4 se retrouve dans une position plus ou moins inclinée par rapport à une direction verticale. Cette tige 4 est assimilable à une bande métallique de faible épaisseur. La tablette 1 repose sur l'embase 3, tout en étant soutenue par la tige 4. Un système d'acquisition d'images 7 sous la forme d'une caméra vidéo haute résolution, avantageusement supérieure ou égale à 1 million de pixels, est fixée à la tige 4 par l'intermédiaire d'une carte électronique 40, en se retrouvant au dos de ladite tablette 1. La carte électronique 40 supporte également une cible 8 de visualisation pour l'individu, et un flash 9 pour permettre de mieux maitriser les conditions d'éclairage, et de visualiser sur les images acquises par la caméra 7 et visibles sur l'écran, les reflets cornéens de chaque oeil pour obtenir une meilleure précision sur les mesures. La carte électronique 40 supporte également une capacité au voisinage du flash 9. Cette capacité, qui peut par exemple représenter la cible 8, est rechargée par l'intermédiaire de la carte électronique 40, qui est alimentée par au moins un câble USB 41,42, ladite capacité étant apte à fournir l'énergie nécessaire pour faire fonctionner le flash 9. Cette capacité a l'avantage de pouvoir charger très rapidement le flash 9, et donc d'éviter des temps de latence trop longs entre deux flashs consécutifs. La tablette 1 peut posséder un écran tactile ou être utilisée par l'intermédiaire d'une souris. Ladite tablette 1 embarque le calculateur et son logiciel associé permettant de déclencher la caméra, récupérer les images, réaliser le traitement desdites images et afficher le résultat des mesures. La normale à l'écran est orientée selon une première direction de l'espace, et l'axe de visée de la caméra 7 est orienté selon une deuxième direction, qui est opposée à la première direction par rapport à un plan vertical. La caméra 7 est munie d'un inclinomètre permettant de déterminer son inclinaison, quelle que soit son orientation dans l'espace. Ce dispositif 1 est de faible dimension et peut être facilement installé sur une table ou un bureau. Il est de plus configuré pour être manipulé par un opérateur pouvant être un opticien, et désirant mesurer les paramètres morpho-géométriques d'un individu porteur de lunettes. En effet, l'individu porteur de lunettes 21 se positionne devant la caméra 7, tandis que l'opticien se place face à l'écran de la tablette 1 et fait pivoter la tige 4 de soutien portant la caméra 7, pour bien cadrer la monture 21 et les yeux 27 de l'individu sur l'écran de visualisation. Le procédé de mesure selon l'invention peut alors être lancé. Selon une autre variante de réalisation, la caméra et l'écran de la tablette 1 peuvent être placés cote à cote pour permettre à l'individu porteur de lunettes de piloter lui-même le procédé de mesure selon l'invention.

En se référant à la figure 6, un deuxième mode de réalisation préféré d'un dispositif 10 de mesure selon l'invention, comprend un système d'acquisition d'images 17 sous la forme d'une caméra vidéo haute résolution, avantageusement supérieure ou égale à 1 million de pixels. Cette caméra 17 est portée par un support 12, présentant une embase élargie 13 surmontée d'une tige 14 déformable pouvant facilement se tordre pour adopter une pluralité de positions. Lorsque l'embase 13 repose sur une surface 16 sensiblement plane, la tige 14 se retrouve dans une position plus ou moins inclinée par rapport à une direction verticale. Une carte électronique 50 qui est fixée à la tige 14, supporte la caméra 17, une cible 18 de visualisation pour l'individu porteur de lunettes 21, et un flash 19 pour permettre de mieux maitriser les conditions d'éclairage, et de visualiser sur les images acquises par la caméra 17 et visibles sur l'écran, les reflets cornéens de chaque oeil, et ainsi obtenir une meilleure précision sur les mesures. La carte électronique 50 supporte une capacité au voisinage du flash 19. Cette capacité, qui peut par exemple, constituer la cible, est ainsi rechargée par l'intermédiaire de la carte électronique 50, qui est alimentée par au moins un câble USB 51, ladite capacité étant apte à fournir l'énergie nécessaire pour faire fonctionner le flash 19. Cette capacité a l'avantage de pouvoir charger très rapidement le flash 19, et donc d'éviter des temps de latence trop longs entre deux flashs consécutifs. Cette caméra 17 est munie d'un inclinomètre permettant de déterminer son inclinaison, quelle que soit son orientation dans l'espace. Un écran de visualisation associé à un calculateur, placé dans l'environnement immédiat de ladite caméra 17 afin de pouvoir visualiser les images acquises par ladite caméra 17, ainsi que les résultats obtenus, est relié à ladite caméra 17 par le biais d'une liaison de données, telle que par exemple un câble USB 30. Ce câble 30 permet d'envoyer au calculateur les images obtenues ainsi que les données de l'inclinomètre. Le calculateur de ce mode de réalisation offre les mêmes possibilités que celles du calculateur du premier mode de réalisation. Suivant l'orientation dudit écran, le procédé de mesures selon l'invention peut-être piloté, soit par un opticien, soit par l'individu porteur de lunettes lui-même. Ce dispositif 10 d'acquisition d'images est de faible dimension et peut être facilement installé sur une table ou un bureau. Il peut même être déplacé sur ladite table ou ledit bureau, et être plus ou moins incliné, grâce à une simple manipulation manuelle.

Pour les deux modes de réalisation décrits, les caméras 7,17 ont une orientation en mode portrait, ce qui permet de couvrir une large gamme de taille d'individu sans avoir à régler l'orientation desdites caméras 7,17. Cependant, pour les situations inhabituelles correspondant par exemple à un individu de trop grande taille, ou qui serait assis alors qu'il devrait plutôt être débout et vice versa, la caméra 7,17 est inclinée de l'angle approprié pour cadrer l'image sur le visage du porteur, et l'inclinomètre permet de mesurer cet angle d'inclinaison afin de l'intégrer ensuite dans le traitement des images acquises pour corriger les mesures obtenues. Une autre variante de réalisation d'un procédé selon l'invention, consiste à utiliser une caméra 7,17 fixe, non réglable en inclinaison, le porteur devant adapter sa position, au moyen par exemple du réglage en hauteur du siège sur lequel il est assis, afin que son visage apparaisse centré sur l'écran de la tablette 1. Outre les images obtenues par les caméras 7,17, les écrans permettent également d'afficher le résultat des mesures, de façon quasi instantanée. Le calculateur des deux dispositifs de mesure 1,10 intègrent un logiciel apte à déclencher la caméra, récupérer les photos, réaliser le traitement d'images et les calculs de hauteur, de distance interpupillaire, etc., et capable d'afficher les résultats.

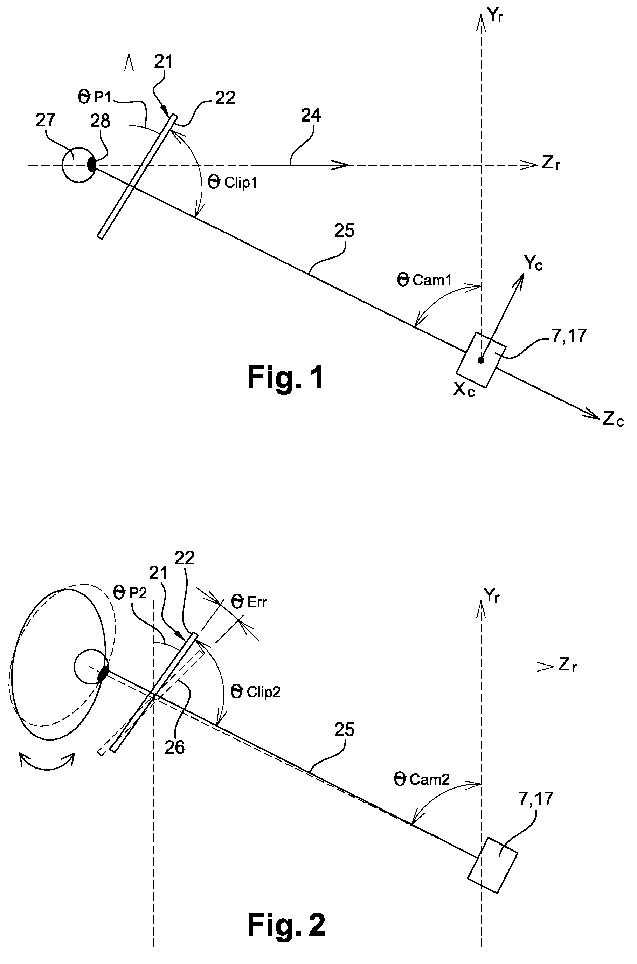

En se référant à la figure 1 l'individu porteur de lunettes 21 et dont la monture est équipée d'un clip 22 avec des marqueurs, se place devant une caméra 7,17 à haute définition. Un opticien demande à l'individu d'adopter une première posture, confortable et naturelle, consistant à regarder devant lui un point à l'infini. La direction de vision, matérialisée par la flèche 24 est alors sensiblement horizontale. L'opticien règle la caméra 7,17 de façon à voir le visage de l'individu sur un écran qui est relié à la caméra 7,17, en inclinant le cas échéant, la caméra 7,17. Une fois le visage de l'individu bien positionné dans le champ de la caméra 7,17, l'opticien acquiert une première image. Le calculateur détermine alors l'orientation tridimensionnelle (3D) précise du clip 22 de la monture 21, et en déduit un angle panto-scopique $\Theta P1$, qui est déterminé en fonction de l'angle $\Theta Clip1$ du clip 22 par rapport à l'axe 25 de la caméra 7,17, et par rapport à l'angle $\Theta Cam1$ de la caméra 7,17 avec la verticale et mesuré avec l'inclinomètre de la caméra 7,17. La mesure de l'angle pantoscopique $\Theta P1$ par le clip 22 s'effectue grâce à au moins trois marqueurs positionnés sur le clip 22, dont les positions relatives sont parfaitement connues. Ces marqueurs définissent un plan unique, et la caméra 7,17 associée à un logiciel de traitement d'image va déterminer la position en 3D de ces marqueurs dans le repère $(Xc,Yc,Zc)$, et par conséquent l'orientation de ce plan par rapport à ce repère. Cette orientation donne directement l'angle $\Theta Clip1$. La mesure des coordonnées 3D des marqueurs du clip 22 se fait classiquement avec des algorithmes itératifs du type POSIT décrit dans l'article IEEE Tansactions on pattern analysis and machine intelligence- "Exact and Approximate Solutions of the Perspective-Three-Point Problem" -November 1992, vol. 14 No. 11, pp. 1100-1105 D. De Menthon and L.S. Davis.

On obtient alors la relation angulaire :

$$\Theta P1 = \Theta Clip1 - \Theta Cam1$$

Dans l'hypothèse où le procédé reposerait sur l'acquisition d'une deuxième image du visage de l'individu regardant une cible 8,18 placée à proximité de la caméra 7,17, ledit procédé se déroulerait comme suit.

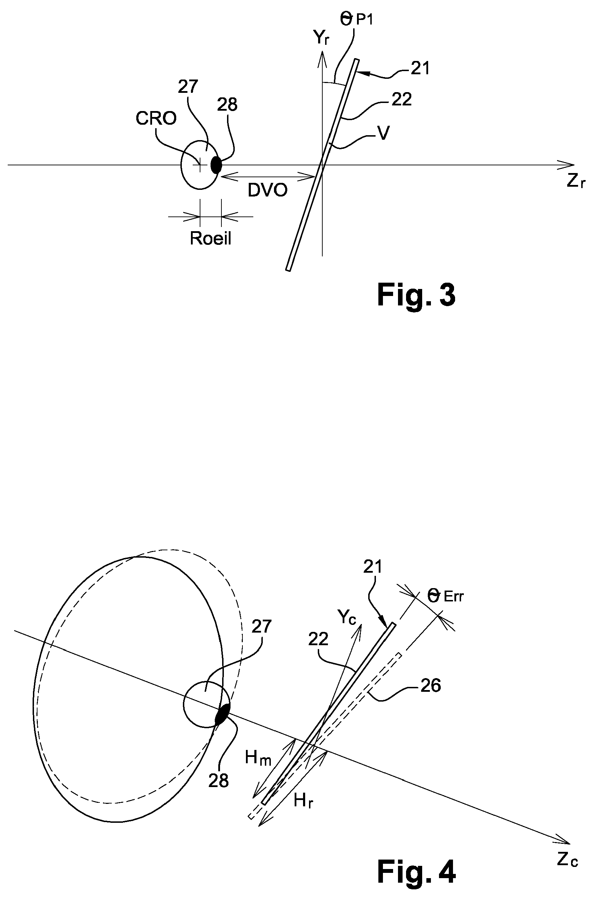

En se référant aux figures 2, et 4, l'opticien demande à l'individu d'adopter une deuxième posture, confortable et naturelle, consistant à regarder une cible placée sur la caméra 7,17. L'opticien acquiert une deuxième image. L'angle pantoscopique $\Theta P2$ est à nouveau mesuré. Idéalement, le dispositif ne bouge pas entre les deux postures $(\Theta Cam1 = \Theta Cam2 = \Theta Cam)$ car le champ de la caméra est suffisamment grand pour couvrir le déplacement de la tête entre les 2 positions. Un flash 9,19 est activé lors de cette deuxième acquisition d'image de manière à obtenir les reflets cornéens. Les reflets cornéens sont extraits de l'image, ainsi que les bords inférieurs droit-gauche et les bords côtés nasal droit-gauche de la monture 21, afin de mesurer les hauteurs (H) et les demi distances pupillaires (1/2PD). Le clip 22 est aussi utilisé pour remettre l'image à l'échelle et donc obtenir des valeurs de H et PD correctes. En se référant à la figure 4, la hauteur mesurée vaut ici Hm et comporte une erreur, car le port de tête dans la deuxième posture n'est pas le port de tête idéal matérialisé sur les figures 2 et 4 par le clip 22 en pointillés 26, et pour lequel l'erreur est nulle et qui correspondrait à une rotation de la tête égale à un angle 90°- $\Theta Cam$, où $\Theta Cam$ est l'angle entre la caméra 7,17 et la verticale. La valeur réelle de la hauteur Hr diffère de la hauteur mesurée Hm par la relation Hr=Hm+$\Delta$H. On a représenté à titre indicatif l'erreur angulaire $\Theta Err$ sur la figure 4 correspondant à la deuxième posture, et en pointillés 26 la position de la tête et du clip 22 correspondant à une erreur angulaire $\Theta Err$ nulle. Cette erreur angulaire provient du fait que l'angle d'inclinaison entre le plan du visage de l'individu et une direction horizontale, que ledit individu adopte lors de la première posture, est différent de l'angle d'inclinaison entre le plan de son visage et l'axe reliant ses yeux 27 à la cible, et qu'il adopte lors de la deuxième posture.

Les erreurs sur les hauteurs H sont corrigées en prenant en compte l'erreur d'angulation du clip $\Theta Err$ sur la seconde image et la distance verre-oeil (DVO), qui est matérialisée sur la figure 3. L'erreur d'angulation est donnée par :

$$\Theta Err = \Theta P1 - \Theta P2 - (90° - \Theta Cam)$$

et le correctif sur la hauteur est donné en première approximation par :

$$\Delta H = (Roeil + DVO) \times \tan(\Theta Err) = d(CRO,V) \times \tan(\Theta Err),$$

où Roeil est le rayon de l'oeil, valant en moyenne 12mm, et DVO est la distance verre-oeil, valant en moyenne 15mm. Le paramètre d(CRO,V) représente la distance entre le centre de rotation CRO de l'oeil et le verre V. La figure 3 permet notamment de visualiser les distances et les paramètres que représentent DVO, CRO, et Roeil, en se référant à la position du verre V, c'est-à-dire à la position de la monture 21 ou du clip 22, ainsi qu'à la position des yeux et de la pupille 28.

Un procédé selon l'invention vise à éliminer cette étape de correction angulaire.

De cette manière, un procédé de mesure selon l'invention et permettant de déterminer des paramètres morpho-géométriques d'un individu portant des lunettes, au moyen d'un dispositif de mesure selon l'invention, comprend les étapes suivantes :

- Une étape d'acquisition d'une information concernant une première position de la monture 21 portée par un individu, lorsqu'il regarde un point situé devant lui à l'infini, avec un port de tête naturel selon une direction 24 sensiblement horizontale.

Selon un premier mode de réalisation préféré d'un procédé selon l'invention, un clip de repérage classique 22, doté de marqueurs est fixé sur la monture 21, et une photo du visage de l'individu est prise avec une caméra haute définition 7,17. L'opticien effectue les réglages d'usage du système d'acquisition d'images 7,17, en matière de distance et d'inclinaison, pour obtenir une image centrée sur l'écran du visage de l'individu portant la monture 21. A titre d'exemple, l'image du visage de l'individu peut être jugée satisfaisante, si elle apparait entre deux repères prédéfinis de l'écran pouvant être deux lignes parallèles. En se référant à la figure 1, le calculateur détermine alors l'orientation tridimensionnelle précise du clip 22 de la monture 21, et en déduit un angle pantoscopique $\Theta P1$, qui est déterminé en fonction de l'angle du clip 22 $\Theta Clip1$ par rapport à l'axe 25 de visée de la caméra 7,17 et par rapport à l'angle de la caméra 7,17 avec la verticale $\Theta Cam1$.

$$\Theta P1 = \Theta Clip1 - \Theta Cam1$$

Selon un deuxième mode de réalisation préféré d'un procédé selon l'invention, un dispositif de repérage électronique sous la forme d'un capteur 3D de type accéléromètre et/ou inclinomètre est positionné ou incorporé sur le clip 22 qui est fixé à la monture 21. Dans ce cas, le dispositif de repérage électronique est préférentiellement positionné par l'opérateur à un emplacement connu du clip 22 afin de faciliter l'étalonnage du système. Le système dispose en soi, et cela de manière connue, d'un système d'alimentation autonome ou par liaison filaire à la carte électronique 40, 50. Le dispositif de repérage électronique peut également être intégré directement dans le clip 22. Dans ce cas, le clip dispose d'une alimentation intégrée et autonome, et qui est rechargeable de manière filaire ou par l'intermédiaire d'un socle prévu à cet effet.

Le dispositif de repérage électronique est relié, avec une connexion filaire de type USB, ou sans fil de type mode WIFI ou Bluetooth, à la carte électronique (40, 50), qui va directement traiter les signaux reçus, pour fournir une information sur l'inclinaison de la monture.

L'opticien peut alors demander au porteur, soit de se déplacer de façon naturelle dans le magasin, pendant quelques dizaines de secondes, soit de rester assis et d'adopter une posture naturelle de tête pendant quelques secondes. L'opticien a la possibilité, soit de déclencher ponctuellement via un élément de saisie/télécommande des mesures de l'inclinaison du port de tête du porteur de lunettes, soit de lancer une mesure automatique de l'inclinaison du port de tête naturel du porteur de lunettes. Pour cette deuxième option, des mesures sont effectuées régulièrement et, via des lois statistiques, l'inclinaison du visage est alors calculée. Le calculateur détermine ensuite l'orientation 3D précise du clip de la monture 21, et en déduit un angle pantoscopique $\Theta P1$, qui est déterminé en fonction de l'angle du clip $\Theta Clip1PoseNaturelle$ par rapport à l'axe vertical.

$$\Theta P1 = \Theta Clip1PoseNaturelle$$

- D'une étape d'observation par l'individu de la cible 8,18 placée dans une position connue par rapport à la caméra 7,17 à haute définition, en effectuant un mouvement de la tête sans quitter la cible 8,18 des yeux. Préférentiellement il s'agit d'un mouvement de tangage de la tête de bas en haut. De la même façon que pour l'étape précédente, l'opticien effectue les réglages de la caméra 8,18 à haute définition de manière à obtenir une image exploitable du visage de l'individu. L'opticien demande alors à l'individu porteur de lunettes, d'effectuer des hochements de têtes de haut en bas, tout en fixant la cible 8,18. Ces hochements de tête sont assimilables à des mouvements de rotation de la tête, autour d'un axe horizontal parallèle à un axe joignant les deux épaules de l'individu, et effectués dans un plan vertical sans décalage latéral.

- Une étape d'acquisition de plusieurs images du visage de l'individu lors de ce mouvement de hochement de tête, chaque image correspondant à un degré d'inclinaison particulier de la tête. En effet, l'opticien déclenche la caméra haute définition 7,17 pour acquérir une vidéo du mouvement de hochement de tête de l'individu. Lors de cette acquisition, le flash 9,19 a été déclenché de manière à obtenir les reflets cornéens. Pour chaque image extraite de la vidéo, deux paramètres sont mesurés :

A-L'angle pantoscopique $\Theta P2 = \Theta Clip2 - \Theta Cam2$ où $\Theta Clip2$ est l'angle du clip 22 avec l'axe 25 de la caméra et $\Theta Cam2$ est l'angle entre l'axe 25 de la caméra et la verticale.

B-L'erreur d'angulation du clip $\Theta Err = \Theta P1 - \Theta P2 - (90° - \Theta Cam)$

- Une étape de sélection de l'image, pour laquelle la valeur absolue du paramètre $\Theta Err$ est inférieure à une valeur seuil $\varepsilon$ prédéterminée, et qui est voisine de zéro. A titre d'exemple, cette valeur seuil peut être égale à 0.5°. Le mouvement de hochement de tête doit être suffisamment ample, afin d'inclure la position « idéale » du visage pour laquelle la valeur de $\Theta Err$ est nulle.

- Une étape de traitement par le calculateur de l'image sélectionnée pour déterminer les paramètres morpho-géométriques de l'individu, à partir de la position des yeux 27, de la position de la monture 21 dans la première posture, de la position de la monture 21 sur l'image sélectionnée, et du degré d'inclinaison de la caméra 7,17 à haute définition. Cette étape s'affranchit donc d'une sous-étape de correction angulaire, effectuée par un algorithme spécifique, et fournit donc directement les paramètres morpho-géométriques souhaités.

- Une étape de restitution du résultat des mesures.

La valeur de la DVO peut être mesurée grâce aux images correspondant aux 2 postures. Pour ce faire, on utilise les 2 images et on extrait la position du clip 22 obtenue avec les marqueurs 23, ainsi que la position des yeux 27 par l'intermédiaire, par exemple, des pupilles 28, des iris, des reflets cornéens ou des commissures.

Ces positons sont déterminées par un pointage manuel sur l'image par l'opérateur ou par détection automatique par le calculateur sur les 2 images. L'iris, les reflets cornéens et les pupilles sont des éléments qui présentent l'avantage d'être moins masqués par les montures, lors d'un hochement de tête de l'individu, que les commissures. De plus le pointage manuel ou la détection automatique sur l'image desdits éléments se fera de manière plus précise, car ils sont plus facilement identifiables.

Contrairement aux commissures, les yeux ont un mouvement de rotation et sont mobiles dans le repère du clip 22. On peut compenser le mouvement de l'oeil entre les 2 images, de manière à se replacer dans le cas où les yeux n'auraient pas bougé par rapport au clip 22. Ainsi en compensant la position des yeux dans la deuxième image d'une distance dP, on se replace dans le cas où l'objet n'a pas bougé par rapport au clip 22. En première approximation, dP est sensiblement égale à la valeur de translation de la pupille ou de l'iris ou du reflet cornéen entre les 2 images. Un calcul géométrique plus précis peut être développé prenant en compte le rayon de l'oeil, l'angle entre la caméra et l'horizon, la variation d'angle du clip 22 entre les 2 images et la variation d'angle de l'oeil entre les 2 images.

En outre, une compensation géométrique liée au fait que l'iris n'est pas dans le même plan que le sommet de la cornée, est avantageusement prise en compte. De façon préférentielle, une compensation géométrique du défaut de convergence lié au fait que les yeux 27 de l'individu ne regardent pas le capteur du système d'acquisition (7,17) mais le sommet de l'objectif optique, peut être également intégré aux calculs de façon à diminuer les sources d'imprécision potentielles sur les paramètres déterminés avec un procédé selon l'invention.

On détermine la position Y1 et Y2 de la pupille 28 ou de l'iris ou des reflets cornéens des deux yeux 27 dans le plan du clip 22 pour les 2 images par une projection de la pupille 28 ou de l'iris ou des reflets cornéens des deux yeux 27 dans le repère du clip 22, et on en déduit par triangulation la position du CRO des deux yeux 27 dans le repère du clip 22.

$$\text{On a } d(CRO,V) = (Y1-Y2)/\tan(\Theta P1 - \Theta P2)$$

Si on utilise la position des commissures des yeux 27, on a :

$DVO = (Y1-Y2)/\tan(\Theta P1 - OP2)$ avec Y1 et Y2 les coordonnées des commissures des yeux.

De façon arbitraire, on peut envisager de prendre une valeur moyenne pour la distance entre le CRO et V, qui pourrait par exemple valoir 27mm. Dans une première alternative, on peut demander au porteur, lors de la deuxième prise d'image, d'incliner davantage la tête de manière à avoir un écart angulaire d'au moins 10°.

Dans une deuxième alternative, on peut demander à la personne de tourner la tête sans fixer de cible 8,18 ou d'objet particulier et on mesure la DVO en utilisant la commissure des yeux 27.

Dans le cas où le porteur de lunettes 21 n'incline pas la tête entre les deux prises d'image, on a ΘP1= ΘP2.

La distance ou la demi-distance pupillaire PD, la hauteur H séparant la pupille 28 de l'oeil 27 au bord inférieur du verre V ou de la monture 21, la distance DVO entre l'oeil 27 et le verre V, et l'angle pantoscopique ΘP, sont les principaux paramètres morpho-géométriques qui peuvent être déterminés à partir d'un procédé de mesure selon l'invention.

**Revendications**

1.  Procédé de mesure de paramètres morpho-géométriques d'un individu portant des lunettes (21), ledit procédé mettant en oeuvre un dispositif informatique (1,10) autonome comprenant un écran, une cible (8,18), un système d'acquisition d'images (7,17) compact et doté d'un moyen de détermination de son inclinaison ΘCAM par rapport à une référence verticale, ledit système (7,17) étant relié audit écran, et un calculateur permettant de piloter le système d'acquisition d'images (7,17) et de traiter les images obtenues, **caractérisé en ce qu'**il comprend les étapes suivantes,

    - Acquisition d'une information concernant une première position de la monture (21) portée par un individu, lorsqu'il regarde un point situé devant lui à l'infini, avec un port de tête naturel selon une direction sensiblement horizontale (24), la paire de lunettes (21) occupant une position naturelle sur le visage de l'individu, et détermination de l'angle pantoscopique ΘP1 correspondant,
    - Observation par l'individu de la cible (8,18) placée dans une position connue par rapport au système d'acquisition d'images (7,17), en effectuant au moins un mouvement de tangage de la tête de bas en haut sans quitter la cible (8,18) des yeux, la paire de lunettes (21) conservant une position inchangée sur le visage de l'individu par rapport à la première étape,
    - Acquisition au moyen du même système d'acquisition (7,17) d'images que celui utilisé pour la première posture, de plusieurs images du visage de l'individu lors de ce mouvement de rotation, chaque image correspondant à un degré d'inclinaison particulier de la tête, et détermination des angles pantoscopiques ΘP2 correspondants,
    - Sélection de l'image la plus proche de l'image idéale pour laquelle l'inclinaison du visage par rapport à un axe reliant les yeux (27) à la cible (8,18) observée, est quasiment identique à l'inclinaison du visage par rapport à une direction horizontale (24) adoptée par l'individu lorsqu'il regarde un point à l'infini, ladite sélection étant réalisée lorsque la valeur absolue de l'erreur d'angulation ΘErr de la monture définie par : ΘErr = ΘP1-ΘP2-(90°-ΘCam) est inférieure à une valeur seuil prédéterminée qui est voisine de zéro,
    - Traitement par le calculateur de l'image sélectionnée pour déterminer les paramètres morpho-géométriques de l'individu, à partir de la position des yeux (27), de la position de la monture (21) dans la première posture, de la position de la monture (21) sur l'image sélectionnée, et du degré d'inclinaison du système d'acquisition d'images (7,17),
    - Restitution du résultat des mesures.

2.  Procédé de mesure selon la revendication 1, **caractérisé en ce que** le système d'acquisition d'images (7,17) est une caméra haute résolution.

3.  Procédé de mesure selon l'une quelconque des revendications 1 ou 2, **caractérisé en ce que** l'étape d'acquisition de l'information concernant la première position de la monture (21), est réalisée à partir d'une image du visage de l'individu, obtenue avec le système d'acquisition d'images (7,17).

4.  Procédé de mesure selon la revendication 3, **caractérisé en ce que** la monture (21) est équipée d'un élément de repérage sous la forme d'un clip (22) doté de marqueurs et fixé sur ladite monture (21), lesdits marqueurs étant représentatifs de l'orientation spatiale de la monture (21).

5.  Procédé de mesure selon l'une quelconque des revendications 1 à 4, **caractérisé en ce que** l'étape d'acquisition de l'information concernant la première position de la monture (21), est réalisée au moyen d'un dispositif de repérage électronique, ledit dispositif étant solidarisé à la monture (21) ou sur un clip (22) fixé à ladite monture.

6.  Procédé de mesure selon la revendication 5, **caractérisé en ce que** le clip est muni d'un module de communication sans fil permettant de remonter les mesures effectuées vers un appareil situé à distance.

7.  Procédé selon l'une quelconque des revendications 1 à 6, **caractérisé en ce que** le moyen de détermination de l'inclinaison du système d'acquisition d'images (7,17) est un inclinomètre.

**8.** Procédé selon l'une quelconque des revendications là 7, **caractérisé en ce que** les paramètres morpho-géométriques mesurés par ledit procédé sont la hauteur (H) entre la pupille (28) et le rebord inférieur du verre (V), et l'angle pantoscopique.

**9.** Procédé selon l'une quelconque des revendications 1 à 8, **caractérisé en ce qu'**un opérateur est placé devant l'individu porteur de lunettes, ledit opérateur réalisant le réglage du système d'acquisition d'images (7,17) et pilotant les différentes étapes dudit procédé.

**10.** Dispositif de mesure pour la mise en oeuvre d'un procédé de mesure selon l'une quelconque des revendications 1 à 9, ledit dispositif comprenant un calculateur, au moins une caméra (7,17) équipée d'un inclinomètre, un écran d'affichage permettant de visualiser les prises de vue assurées par ladite caméra (7,17) ainsi que le résultat des mesures, la position de la caméra (7,17) et la position de l'écran pouvant être ajustées indépendamment l'une de l'autre, un élément de repérage de la monture (21) sous la forme d'un clip (22) possédant des marqueurs, le dispositif étant de faible dimension et pouvant ainsi être facilement installé sur une table ou un bureau, et étant inclinable pour s'adapter à la taille de l'individu permettant à cet individu d'adopter une posture naturelle, le dispositif étant **caractérisé en ce que** le calculateur est programmé pour mettre en oeuvre le procédé selon l'une des revendications 1 à 9.

**11.** Dispositif de mesure selon la revendication 10, **caractérisé en ce qu'**il comprend une tablette (1) regroupant l'écran, une caméra secondaire, l'inclinomètre et le calculateur, ainsi que ladite au moins une caméra (7).

**12.** Dispositif de mesure selon l'une quelconque des revendications 10 ou 11, **caractérisé en ce qu'**il comprend un dispositif électronique de repérage spatial de la monture (21).

**13.** Dispositif de mesure selon la revendication 11, **caractérisé en ce qu'**il comprend un support (2) sur lequel viennent se fixer la tablette (1) et la caméra (7).

**14.** Dispositif de mesure selon la revendication 13, **caractérisé en ce que** la caméra (7) et la tablette (1) sont situées de par et d'autre d'un plan vertical et font entre eux un angle compris entre 15 et 45°.

## Patentansprüche

**1.** Verfahren zum Messen von morphogeometrischen Parametern einer Person, die eine Brille (21) trägt, wobei das Verfahren eine autonome Datenverarbeitungsvorrichtung (1, 10) verwendet, die Folgendes umfasst: einen Bildschirm, ein Ziel (8, 18), ein kompaktes Bilderfassungssystem (7, 17), das mit einem Mittel zum Bestimmen seiner Neigung ΘCAM in Ortung auf eine vertikale Referenz versehen ist und das mit dem Bildschirm verbunden ist, und einen Rechner, der ermöglicht, das Bilderfassungssystem (7, 17) zu steuern und die erhaltenen Bilder zu verarbeiten, **dadurch gekennzeichnet, dass** es die folgenden Schritte umfasst:

- Erfassen von Informationen, die eine erste Position des von einer Person getragenen Gestells (21) betreffen, wenn diese einen Punkt, der sich im Unendlichen vor ihr befindet, mit einer natürlichen Kopfhaltung in einer im Wesentlichen horizontalen Richtung (24) betrachtet, wobei die Brille (21) eine natürliche Position im Gesicht der Person einnimmt, und Bestimmen des entsprechenden pantoskopischen Winkels ΘP1,
- Beobachten durch die Person des Ziels (8, 18), das an einer bekannten Position in Ortung auf das Bilderfassungssystem (7, 17) angeordnet ist, durch Ausführen wenigstens einer Nickbewegung des Kopfes von unten nach oben, ohne das Ziel (8, 18) aus den Augen zu verlieren, wobei die Brille (21) in Ortung auf den ersten Schritt eine unveränderte Position im Gesicht der Person beibehält,
- Erfassen mittels desselben Bilderfassungssystems (7, 17) wie jenem, das für die erste Haltung verwendet wird, mehrerer Bilder des Gesichts der Person bei dieser Drehbewegung, wobei jedes Bild einem bestimmten Neigungsgrad des Kopfes entspricht, und Bestimmen der entsprechenden pantoskopischen Winkel ΘP2,
- Auswählen des Bildes, das dem idealen Bild am nächsten kommt, für das die Neigung des Gesichts in Ortung auf eine Achse, die die Augen (27) mit dem beobachteten Ziel (8, 18) verbindet, mit der Neigung des Gesichts in Ortung auf eine horizontale Richtung (24), die von der Person eingenommen wird, wenn sie einen Punkt im Unendlichen betrachtet, im Wesentlichen übereinstimmt, wobei die Auswahl erfolgt, wenn der Absolutwert des Angulationsfehlers ΘErr des Gestells, der durch ΘErr = ΘP1 - ΘP2 - (90° - ΘCAM) definiert ist, kleiner als ein vorgegebener Schwellenwert ist, der ungefähr null ist,
- Verarbeiten durch den Rechner des ausgewählten Bildes, um die morphogeometrischen Bilder der Person anhand der Position der Augen (27), der Position des Gestells (21) in der ersten Haltung, der Position des Gestells (21) auf dem ausgewählten Bild und des Neigungsgrades des Bilderfassungssystems (7, 17) zu bestimmen,

- Wiedergewinnen des Messergebnisses.

2. Messverfahren nach Anspruch 1, **dadurch gekennzeichnet, dass** das Bilderfassungssystem (7, 17) eine hochauflösende Kamera ist.

3. Messverfahren nach einem der Ansprüche 1 oder 2, **dadurch gekennzeichnet, dass** der Schritt des Erfassens von Informationen bezüglich der ersten Position des Gestells (21) anhand eines Bildes des Gesichts der Person erfolgt, das mit dem Bilderfassungssystem (7, 17) erhalten wird.

4. Messverfahren nach Anspruch 3, **dadurch gekennzeichnet, dass** das Gestell (21) mit einem Ortungselement in Form einer Klammer (22), die mit Markierern versehen ist und an dem Gestell (21) befestigt ist, ausgerüstet ist, wobei die Markierer die räumliche Orientierung des Gestells (21) repräsentieren.

5. Messverfahren nach einem der Ansprüche 1 bis 4, **dadurch gekennzeichnet, dass** der Schritt des Erfassens der Informationen bezüglich der ersten Position des Gestells (21) mittels einer elektronischen Ortungsvorrichtung erfolgt, wobei die Vorrichtung mit dem Gestell (21) oder mit einer an dem Gestell befestigten Klammer (22) fest verbunden ist.

6. Messverfahren nach Anspruch 5, **dadurch gekennzeichnet, dass** die Klammer mit einem Modul für drahtlose Kommunikation versehen ist, das ermöglicht, die ausgeführten Messungen an ein in einem Abstand befindliches Gerät zu übertragen.

7. Verfahren nach einem der Ansprüche 1 bis 6, **dadurch gekennzeichnet, dass** das Mittel zum Bestimmen der Neigung des Bilderfassungssystems (7, 17) ein Inklonometer ist.

8. Verfahren nach einem der Ansprüche 1 bis 7, **dadurch gekennzeichnet, dass** die mit dem Verfahren gemessenen morphogeometrischen Parameter die Höhe (H) zwischen der Pupille (28) und dem unteren Rand des Glases (V) und der pantoskopische Winkel sind.

9. Verfahren nach einem der Ansprüche 1 bis 8, **dadurch gekennzeichnet, dass** vor der Person, die die Brille trägt, eine Bedienungsperson platziert wird, wobei die Bedienungsperson die Regulierung des Bilderfassungssystems (7, 17) ausführt und die verschiedenen Schritte des Verfahrens steuert.

10. Messvorrichtung für die Ausführung eines Messverfahrens nach einem der Ansprüche 1 bis 9, wobei die Vorrichtung Folgendes umfasst: einen Rechner, wenigstens eine mit einem Inklonometer ausgerüstete Kamera (7, 17), einen Anzeigeschirm, der ermöglicht, die durch die Kamera (7, 17) gesicherten Aufnahmen sowie das Ergebnis der Messungen anzuzeigen, wobei die Position der Kamera (7, 17) und die Position des Schirms unabhängig voneinander eingestellt werden können, und ein Ortungselement des Gestells (21) in Form einer Klammer (22), die Markierer besitzt, wobei die Vorrichtung kleine Abmessungen hat und somit einfach auf einem Tisch oder einem Schreibtisch installiert werden kann und neigbar ist, um sich an die Größe der Person anzupassen, was dieser Person ermöglicht, eine natürliche Haltung einzunehmen, wobei die Vorrichtung **dadurch gekennzeichnet ist, dass** der Rechner programmiert ist, um das Verfahren nach einem der Ansprüche 1 bis 9 auszuführen.

11. Messvorrichtung nach Anspruch 10, **dadurch gekennzeichnet, dass** sie ein Tablet (1), das den Bildschirm, eine sekundäre Kamera, das Inklonometer und den Rechner in sich vereinigt, sowie die wenigstens eine Kamera (7) umfasst.

12. Messvorrichtung nach einem der Ansprüche 10 oder 11, **dadurch gekennzeichnet, dass** sie eine elektronische Vorrichtung zur räumlichen Ortung des Gestells (21) umfasst.

13. Messvorrichtung nach Anspruch 11, **dadurch gekennzeichnet, dass** sie einen Träger (2) umfasst, an dem das Tablet (1) und die Kamera (7) befestigt sind.

14. Messvorrichtung nach Anspruch 13, **dadurch gekennzeichnet, dass** sich die Kamera (7) und das Tablet (1) beiderseits einer vertikalen Ebene befinden und zwischen sich einen Winkel im Bereich von 15 bis 45° einschließen.

**Claims**

1. Method for measuring morpho-geometric parameters of an individual wearing spectacles (21), said method implementing an autonomous computerized device (1,10) comprising a screen, a target (8,18), a compact image acquisition system (7,17) furnished with a means for determining the inclination thereof ΘCam relative to a vertical reference, said system (7,17) being linked to said screen, and a computer making it possible to control the image acquisition system (7,17) and to process the images obtained, **characterized in that** it comprises the following steps,

   - Acquisition of an item of information relating to a first position of the frame (21) worn by an individual, when he is looking at a point situated in front of him at infinity, with a natural head carriage in a substantially horizontal direction (24), the pair of spectacles (21) occupying a natural position on the individual's face, and determination of the corresponding pantoscopic angle ΘP1,
   - Observation by the individual of the target (8,18) placed in a known position with respect to the image acquisition system (7,17), while performing at least one upward pitching movement of his head without taking his eyes off the target (8,18), the pair of spectacles (21) maintaining an unchanged position on the individual's face with respect to the first step,
   - Acquisition by means of the same image acquisition system (7,17) as that used for the first posture, of several images of the individual's face during this rotation movement, each image corresponding to a particular degree of inclination of the head, and determination of the corresponding pantoscopic angles ΘP2,
   - Selection of the image closest to the ideal image for which the inclination of the face with respect to an axis linking the eyes (27) to the observed target (8,18) is nearly identical to the inclination of the face with respect to a horizontal direction (24) adopted by the individual when he is looking at a point at infinity, said selection being carried out when the absolute value of the angulation error ΘErr of the frame, defined by: ΘErr = ΘP1-ΘP2-(90°-ΘCam) is smaller than a predetermined threshold value that is about zero,
   - Processing by the computer of the selected image so as to determine the morpho-geometric parameters of the individual, on the basis of the position of the eyes (27), of the position of the frame (21) in the first posture, of the position of the frame (21) on the selected image, and of the degree of inclination of the image acquisition system (7,17),
   - Outputting of the result of the measurements.

2. Measurement method according to Claim 1, **characterized in that** the image acquisition system (7,17) is a high-resolution video camera.

3. Measurement method according to either of Claims 1 and 2, **characterized in that** the step of acquiring the item of information relating to the first position of the frame (21) is carried out on the basis of an image of the individual's face, obtained with the image acquisition system (7,17).

4. Measurement method according to Claim 3, **characterized in that** the frame (21) is equipped with a locating element in the form of a clip (22) furnished with markers and fixed on said frame (21), said markers being representative of the spatial orientation of the frame (21).

5. Measurement method according to any one of Claims 1 to 4, **characterized in that** the step of acquiring the item of information relating to the first position of the frame (21) is carried out by means of an electronic locating device, said device being secured to the frame (21) or on a clip (22) fixed to said frame.

6. Measurement method according to Claim 5, **characterized in that** the clip is fitted with a wireless communication module making it possible to upload the measurements performed to a remotely situated rig.

7. Method according to any one of Claims 1 to 6, **characterized in that** the means for determining the inclination of the image acquisition system (7,17) is an inclinometer.

8. Method according to any one of Claims 1 to 7, **characterized in that** the morpho-geometric parameters measured by said method are the height (H) between the pupil (28) and the lower rim of the lens (L), and the pantoscopic angle.

9. Method according to any one of Claims 1 to 8, **characterized in that** an operator is placed in front of the spectacle wearing individual, said operator carrying out the adjustment of the image acquisition system (7,17) and controlling the various steps of said method.

**10.** Measurement device for the implementation of a measurement method according to any one of Claims 1 to 9, said device comprising a computer, at least one video camera (7,17) equipped with an inclinometer, a display screen making it possible to view the pictures taken by said video camera (7,17) as well as the result of the measurements, the position of the video camera (7,17) and the position of the screen being able to be set independently of one another, an element for locating the frame (21) taking the form of a clip (22) possessing markers, the device being of small size and thus being able to be easily installed on a table or desk, and being inclinable in order to be adaptable to the size of the individual allowing this individual to adopt a natural posture, the device being **characterised in that** the computer is programmed to implement the method according to one of Claims 1 to 9.

**11.** Measurement device according to Claim 10, **characterized in that** it consists of a tablet (1) grouping together the screen, a secondary video camera, the inclinometer and the computer, as well as said at least one video camera (7).

**12.** Measurement device according to either of Claims 10 and 11, **characterized in that** it comprises an electronic device for spatial mapping of the frame (21).

**13.** Measurement device according to Claim 11, **characterized in that** it comprises a support (2) on which are fixed the tablet (1) and the video camera (7).

**14.** Measurement device according to Claim 13, **characterized in that** the video camera (7) and the tablet (1) are situated on either side of a vertical plane and make between themselves an angle lying between 15 and 45°.

**Fig. 1**

**Fig. 2**

**Fig. 3**

**Fig. 4**

**Fig. 5**

-6-

**Fig. 6**

-16-

## RÉFÉRENCES CITÉES DANS LA DESCRIPTION

**Documents brevets cités dans la description**

- WO 2008129168 A1

- FR 2860887 A1

**Littérature non-brevet citée dans la description**

- Exact and Approximate Solutions of the Perspective-Three-Point Problem. *IEEE Tansactions on pattern analysis and machine intelligence,* Novembre 1992, vol. 14 (11), 1100-1105